# FASCICULE DE BREVET EUROPEEN

(11) **EP 0 453 343 B1**
(45) Date de publication et mention de la délivrance du brevet: **16.07.1997**
(21) Numéro de dépôt: 91400858.6
(22) Date de dépôt: 29.03.1991
(51) Int. Cl.: G11B 7/09, G11B 7/013, G11B 7/26

(54) **Procédé de réalisation de marques déportées sur un support d'informations prégravé ainsi que procédé d'élaboration d'un signal d'erreur de suivi radial, et dispositif de lecture pour la mise en oeuvre du procédé**
Verfahren zur Herstellung von verschobenen pits auf einem vorgeprägten Informationsmedium, Verfahren zur Ausverarbeitung eines Spurfehlersignals und Wiedergabegerät zur Realisierung dieses Verfahrens
Method of making offset pits in a pregrooved information medium, method for extracting a tracking error signal and reproducing apparatus for realizing this method

(30) Priorité: 03.04.1990 FR 9004236
(43) Date de publication de la demande: 23.10.1991
(73) Titulaire: ART TECH GIGADISC ATG, 31047 Toulouse (FR)
(72) Inventeur: Bec, Daniel, F-92045 Paris la Defense (FR); Fabro, Didier, F-92045 Paris la Defense (FR); Benguigui, Michel, F-92045 Paris la Defense (FR)
(74) Mandataire: Ruellan-Lemonnier, Brigitte

(56) Documents cités:
- EP-A- 0 089 274
- EP-A- 0 201 093
- EP-A- 0 283 017
- EP-A- 0 320 975
- FR-A- 2 613 865
- GB-A- 2 167 595

## Description

La présente invention concerne un procédé de réalisation des marques déportées par rapport à l'axe moyen des pistes ainsi qu'un procédé d'élaboration d'un signal d'erreur de suivi radial d'une piste lors de la lecture d'un tel support d'informations et un dispositif de lecture optique pour la mise en oeuvre du procédé d'élaboration du signal d'erreur de suivi radial de pistes.

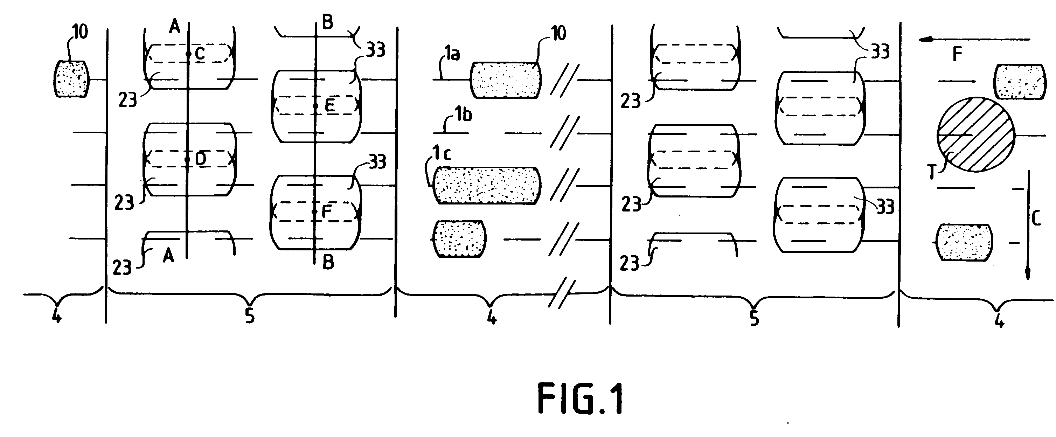

Il a été décrit, notamment dans le brevet français N°2 523 347 au nom de THOMSON-CSF, un support d'informations mobile prégravé comportant des zones de prégravure avec notamment deux marques décalées latéralement de chaque côté de l'axe moyen de la piste pour générer un signal d'erreur d'écarts de piste et réaliser ainsi le suivi radial de la piste. Ce type de prégravure est actuellement utilisé sur certains disques optiques numériques. Toutefois, le pas interpiste doit permettre la gravure des marques décalées, ce qui limite la capacité du disque et est particulièrement pénalisant pour les disques de petit diamètre. Pour pouvoir resserrer le pas des pistes jusqu'à la limite admissible pour la diaphonie apparaissant entre les signaux d'informations enregistrés sur des pistes contigues, la société Alcatel Thomson Gigadisc a proposé, dans la demande de brevet européen N°0201093, de réaliser les marques décalées respectivement à gauche et à droite de l'axe moyen des pistes de telle sorte qu'elles présentent une disposition symétrique par rapport à l'axe d'interpiste situé à mi-distance des axes de deux éléments de piste voisins. Une telle configuration est représentée sur la figure 1. Sur cette figure, on a représenté une partie très limitée d'un disque optique classique. De ce fait, les axes des pistes 1a, 1b, 1c sont représentés symboliquement par des lignes droites tiretées, alors qu'ils sont en fait constitués par des arcs de cercle ou de spirale. D'autre part, de manière connue, le disque comporte des zones angulaires 4 réservées à l'enregistrement des informations-utilisateur telles que représentées par les marques 10 centrées sur les axes et des zones de prégravure 5 réservées aux fonctions de service du disque tels que l'asservissement du faisceau optique sur la piste, la focalisation, la synchronisation, l'accès. Les zones 4 et 5 sont réalisées de manière à être, au moins localement, alignées radialement.

Comme représenté sur la figure 1, les zones de prégravure 5 comportent chacune au moins deux marques successives 23 et 33 décalées de chaque côté de l'axe moyen des pistes 1a, 1b, 1c. Ces marques sont utilisées pour réaliser le suivi radial de la piste. Pour pouvoir resserrer les axes des pistes entre eux, on utilise dans le cas de la figure 1 une même marque décalée associée à deux axes contigüs. Ainsi la marque 33 centrée en E est utilisée pour réaliser le suivi radial de l'axe 1a et de l'axe 1b. De même, la marque 23 centrée en D est utilisée pour réaliser le suivi radial de l'axe 1b et de l'axe 1c. Dans le cas de la figure 1, on a donc remplacé deux marques distinctes symbolisées par les tiretés en une marque unique centrée à mi-distance des pistes qu'elle doit matérialiser. Les marques 23 et 33 apparaisent donc formées de deux marques partiellement superposées.

Si l'utilisation de telles marques décalées de chaque côté de l'axe moyen des pistes permet de resserrer le pas des pistes, elle ne permet pas de diminuer la longueur des zones de prégravure. Or, la présente invention a pour but de remédier à cet inconvénient en proposant de n'utiliser dans chaque zone de prégravure qu'une marque décalée sur les deux utilisées jusqu'à maintenant.

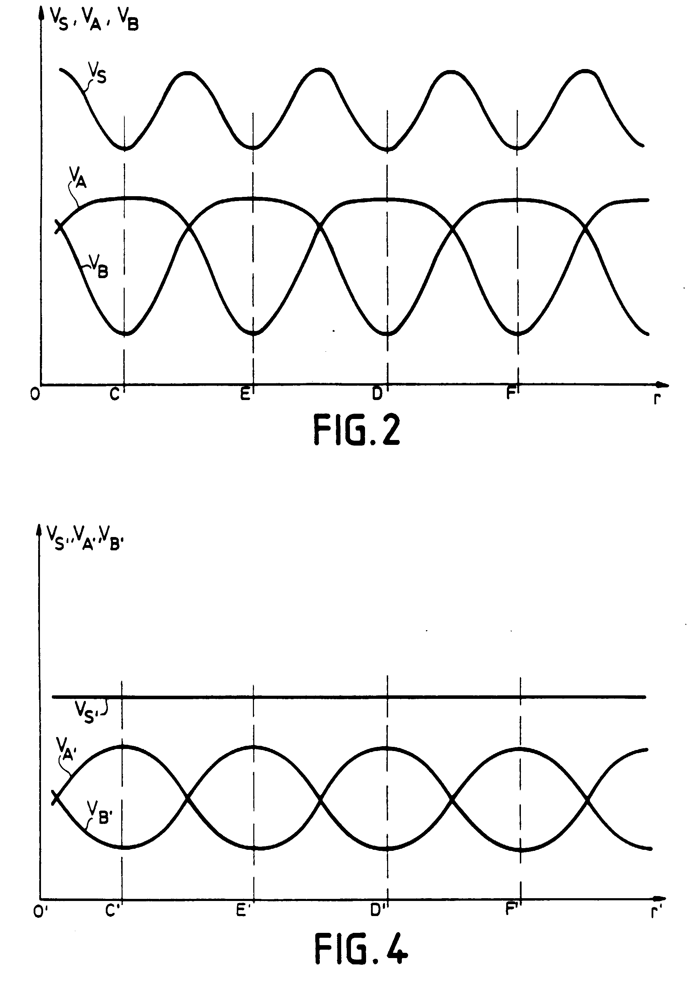

En effet, les informations inscrites sur un support d'informations tel que décrit ci-dessus sont lues en détectant la lumière diffractée par le support d'informations et rentrant à nouveau dans l'objectif générant la tache optique qui éclaire le support comme cela est bien connu de l'homme de l'art. La lumière diffractée est détectée par des photodétecteurs qui transforment le signal lumineux en un signal électrique. Si l'on déplace la tache lumineuse T selon la direction symbolisée par la flèche C sur la figure 1, au niveau des droites AA et BB qui traversent les marques de prégravure 23 et 33 respectivement au centre C, D et E, F de ces marques de prégravure, on obtient respectivement les courbes V_{A} et V_{B} représentées sur la figure 2. Sur cette figure 2, l'abscisse Or représente la distance au centre du disque. Les distances correspondant aux points C et D sur la droite AA de la figure 1 sont représentées par les lettres C et D sur l'axe Or tandis que les distances correspondant aux points E et F de la droite BB sur la figure 1 sont représentées par les lettres E et F sur le même axe Or. Les différences de distances de C et de D, de D et de E, de E et de F au centre du disque sont égales entre elles et égales à l'entraxe des pistes. D'autre part, sur la figure 2 on a représenté une troisième courbe V_{S} qui est la somme de V_{A} et V_{B}. Ainsi, dans le cas d'un support d'informations comportant des zones de prégravure 5 telles que représentées sur la figure 1, la courbe V_{S} de la figure 2 est profondément modulée. Toutefois, la Demanderesse s'est aperçue que, si les deux courbes V_{A} et V_{B} sont rigoureusement symétriques l'une de l'autre par rapport à une droite parallèle à l'axe Or et représentant la valeur moyenne de chacune d'elle, alors la somme des deux courbes V_{A} et V_{B} est une droite parallèle à l'axe Or.

On connait par ailleurs par le document EP-A-0283017 un support d'informations prégravé à marques déportées qui ne comporte qu'une marque décalée au lieu de deux dans chaque zone de prégravure.

Un tel support d'informations comporte au moins une face destinée à l'enregistrement, le long de pistes, d'informations lisibles optiquement, le support étant muni de zones de prégravure alternant avec des zones destinées à l'enregistrement desdites informations, les zones de prégravure comportent des motifs discrets matérialisant l'axe moyen des pistes, dans chaque zone de prégravure, les motifs discrets sont constitués par des marques centrées à mi-distance entre deux pistes adjacentes et présentent une largeur optique, telle que fournie par une optique réelle de fonction de transfert limitée, dans le sens perpendiculaire à l'axe des pistes, sensiblement égale à la largeur optique de la zone située entre deux marques successives selon ledit sens et, d'une zone de prégravure à la suivante, les marques présentent des déports égaux et de signes contraires par rapport aux axes moyens des pistes.

Cependant le document précité n'évoque aucunement une possible exploitation d'une telle disposition des marques autre que pour augmenter la densité d'informations stockées. Ce document n'indique pas non plus de méthode de réalisation d'un tel support d'informations.

La présente invention a pour but de fournir une méthode de réalisation d'un support d'informations prégravé à marques déportées dont la structure des marques permet d'obtenir une courbe V_{S} parallèle à l'axe Or.

La présente invention concerne aussi un procédé de réalisation de marques déportées par rapport à l'axe moyen des pistes sur un support d'informations tel que défini ci-dessus.

Dans ce cas, lors de la réalisation d'un support-père, on grave les marques déportées d'un premier côté par déflexion du faisceau de gravure lors du passage sur une première piste et les marques déportées de l'autre côté par déflexion du faisceau de gravure lors du passage sur une seconde piste adjacente à la première piste puis l'on répète l'opération ci-dessus jusqu'à la fin de la gravure du support-père.

Selon un autre mode de réalisation, lors de la réalisation d'un support-père, on grave les marques déportées par deflexion du faisceau de gravure alternativement d'un côté et de l'autre de l'axe moyen des pistes, une première partie de la marque étant gravée lors du passage du faisceau sur une première piste et une seconde partie de la marque axialement complémentaire étant gravée lors du passage du faisceau sur une seconde piste adjacente à la première piste.

De façon avantageuse chacune des marques déportées présente dans le sens perpendiculaire à l'axe des pistes une largeur sensiblement égale à la distance la séparant d'une marque déportée adjacente selon ledit sens dans la même zone de prégravure.

D'une autre façon avantageuse lesdites marques déportées sont constituées par des éléments circulaires ou oblongs dans le sens de l'axe des pistes.

Ainsi, en utilisant cette configuration spécifique pour les marques déportées de la zone de prégravure du support d'informations, le signal V_{S} = V_{A} + V_{B} correspondant à la somme des signaux détectés lors du passage sur les marques décalées est une constante. En conséquence, si l'on connaît le signal V_{S} une fois pour toute, il suffit de mesurer V_{A} ou V_{B} pour obtenir le signal d'erreur. En effet, le signal d'erreur est donné par la différence V_{A} - V_{B} qui dans ce cas devient égal à : e = V_{A} - (V_{S} - V_{A}) = 2 V_{A} - V_{S}. On obtiendrait la même chose en ne gardant que les autres marques décalées 33 ; dans ce cas, le signal d'erreur e = V_{S} - 2 V_{B}.

La présente invention concerne aussi un procédé d'élaboration d'un signal d'erreur de suivi radial d'une piste par une tache lumineuse d'exploration des pistes d'un support d'informations tel que décrit ci-dessus, dans lequel on réalise au moins une fois la somme des signaux détectés par des moyens de détection optiques lors du passage de la tache lumineuse sur deux marques déportées respectivement d'un côté et de l'autre et l'on mémorise cette somme, puis l'on élabore le signal d'erreur de suivi radial de piste en faisant une comparaison entre ladite somme et un signal détecté lors du passage de la tache lumineuse sur au moins une marque décalée.

Avantageusement la comparaison se fait en utilisant un résultat de la différence entre ladite somme et ledit signal détecté.

Selon un mode de réalisation avantageux de l'invention, lors du passage de la tache lumineuse sur une première puis sur une seconde marque décalée, la première et la seconde marque ayant des déports de signes contraires, les différences s'obtiennent respectivement en soustrayant ladite somme au signal détecté pour la première marque décalée et le signal détecté pour la seconde marque décalée à ladite somme.

D'autres caractéristiques et avantages de la présente invention apparaitront à la lecture de la description faite ci-après d'un mode de réalisation préférentiel du support d'informations prégravé à marques déportées ainsi que d'un mode de réalisation d'un dispositif de lecture permettant de lire le support d'informations prégravé et d'obtenir un signal d'erreur de suivi radial, cette description étant faite avec référence aux dessins ci-annexés dans lesquels:
- la figure 1 déjà décrite représente schématiquement une partie d'un support d'informations prégravé à marques déportées conforme à l'art antérieur ;
- la figure 2 déjà décrite est une courbe donnant l'amplitude des signaux électriques détectés lors du passage sur les marques en fonction de leur distance au centre du disque ;
- la figure 3 est une représentation schématique d'un support d'informations prégravé à marques déportées conforme à la présente invention ;
- la figure 4 représente les courbes donnant l'amplitude des signaux détectés lors du passage sur les marques déportées en fonction de leur distance au centre du support ;
- la figure 5 est une représentation schématique d'un dispositif de lecture optique utilisé avec un support d'informations prégravé conforme à la présente invention ;
- la figure 6 est une représentation schématique d'un circuit donnant le signal d'erreur de suivi de piste ;
- les figures 7 et 8 sont deux représentations schématiques d'un support d'informations prégravé à marques déportées conforme à la présente invention expliquant différents procédés de réalisation des marques.

Pour simplifier la description, dans les figures les mêmes éléments portent les mêmes références.

D'autre part, la présente invention a été décrite en se référant à des marques de prégravure de forme oblongue. Toutefois, il est évident pour l'homme de l'art que d'autres types de marques de prégravure peuvent être utilisés, notamment des marques circulaires.

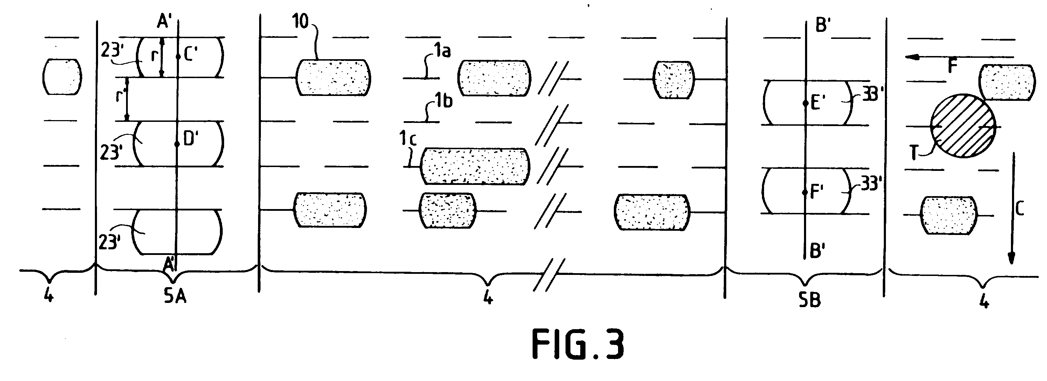

Conformément à la présente invention et comme représenté sur la figure 3, qui représente schématiquement une portion d'un disque optique numérique comportant des axes de piste symbolisés par les références 1a, 1b, 1c, selon lesquels seront enregistrées des informations-utilisateurs 10 dans des zones 4, les zones de prégravure 5 comportent une seule marque décalée, à savoir les marques 23' pour la zone de prégravure 5_{A}, et les marques 33' pour la zone de prégravure 5_{B}. Conformément à la présente invention, les marques de prégravure 23' et 33' décalées sont choisies de même dimension optique radiale r que la zone radiale r' située entre ces mêmes marques. D'autres part, les marques sont centrées exactement à mi-distance des pistes entre lesquelles elles sont situées, comme symbolisé par les références C'-D' et E'-F', qui représentent le centre desdites marques décalées, respectivement 23' et 33'. D'autre part, conformément à la présente invention, d'une zone de prégravure 5_{A} à la zone de prégravure suivante 5_{B}, les marques décalées présentent des déports égaux et de signes contraires par rapport aux axes moyens des pistes comme représentés par la marque 23' centrée en C' et la marque 33' centrée en E' par rapport à l'axe 1a ou la marque centrée en D' et la marque 33' centrée en E' par rapport à l'axe 1b.

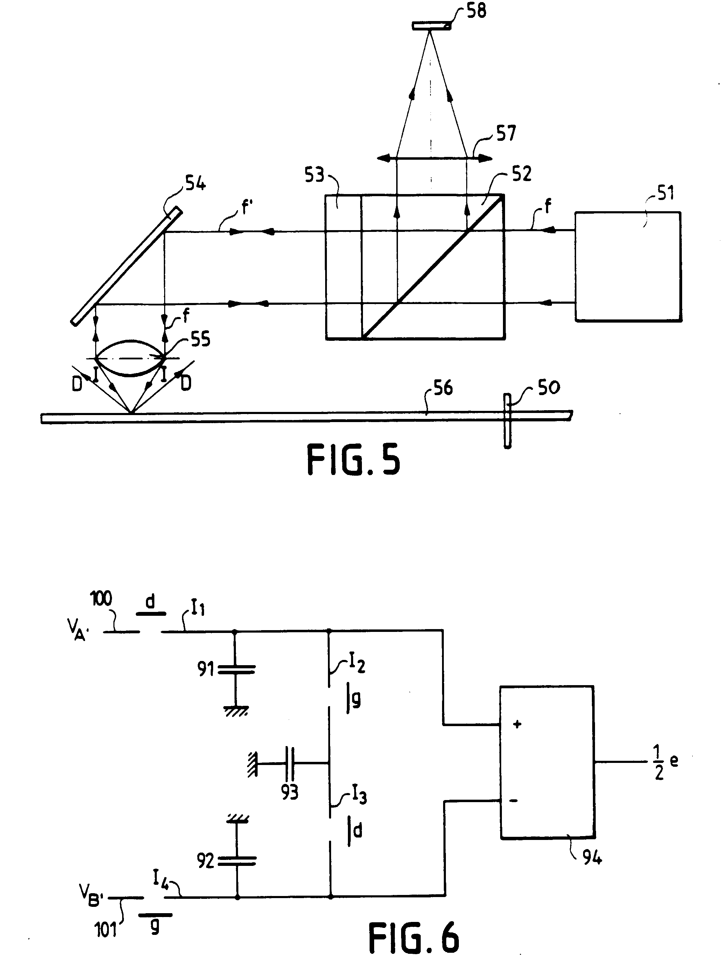

Ce support d'informations est utilisé dans un dispositif lecteur-enregistreur de disques optiques tel que représenté schématiquement sur la figure 5. Ce dispositif est composé d'un module laser 51 fournissant un faisceau lumineux cylindrique représenté par les flèches f, d'un cube séparateur de polarisation 52 et d'une lame quart d'onde 53, d'un miroir de renvoi 54 servant à l'asservissement d'écart de piste, d'un objectif 55 permettant de focaliser le faisceau f sur le disque et le disque 56 d'axe 50. Le faisceau f arrivant sur le disque est noté I-I et le faisceau diffracté par le disque D-D. La partie du faisceau D-D qui pénètre à nouveau dans l'objectif 55 rencontre le miroir 54 puis la lame 53. Cette partie f' de faisceau est ensuite renvoyée par le cube 52 vers la lentille 57 et vers un dispositif photodétecteur 58 qui permet la mesure de la partie f' du faisceau D-D retournant dans l'objectif 55.

Si l'on examine la lumière rentrant à nouveau dans l'objectif 55 quand la tache lumineuse T se déplace selon la direction C sur la figure 3 et occupe différentes positions successives sur les droites A'A' et B'B' de la figure 3, on obtient en sortie du photodétecteur 58 respectivement les courbes V_{A'} et V_{B'} représentées sur la figure 4.

Dans ce cas, on voit que les courbes V_{A'} et V_{B'} sont rigoureusement symétriques l'une de l'autre par rapport à une droite parallèle à l'axe O'r'. De ce fait, lorsque l'on réalise la somme des signaux V_{A'} et V_{B'}, on obtient la courbe V_{S'} qui est formée par une droite parallèle à l'axe O'r'. Cette invariance de V_{S'} résulte du fait que les marques 23' et 33' sont de même dimension optique radiale que la zone radiale située entre deux marques 23' ou deux marques 33' et qu'elles sont centrées exactement à mi-distance des pistes entre lesquelles elles sont situées comme représenté par les références C', E', D', F' sur l'axe O'r' qui correspondent à la position des centres des marques décalées représentées sur la figure 3. En fait, cela ne signifie pas que la dimension optique radiale des marques 23' ou des marques 33' soit égale à celle de la zone radiale située entre deux marques 23' ou deux marques 33' quand on les observe avec une optique de fonction de transfert infinie et donc que ces marques et ces zones ont même dimension géométrique. Il suffit que les signaux de lecture, obtenus par l'emploi d'une optique réelle et donc de fonction de transfert optique limitée, aient les propriétés de symétrie de ceux de la figure 4. Des marques 23 et 33 décrites dans la figure 1 peuvent donner, avec une optique de fonction de transfert limitée, des signaux similaires à ceux de la figure 4. Il est certain que plus les dimensions géométriques radiales des marques 23'et 33' sont proches de celles des zones qui séparent deux marques 23' ou deux marques 33', plus la condition des signaux de la figure 4 est bien vérifiée ; mais l'expérience prouve que malgré une différence notable dans ces deux dimensions radiales, il est possible d'obtenir des signaux proches de ceux de la figure 4 et fournissant un asservissement très satisfaisant.

Il est possible en utilisant les marques décalées de la figure 3 de réaliser le suivi radial de piste. En effet, le signal d'erreur e = V_{A'} - V_{B'} et ce signal d'erreur alimente un dispositif permettant de déplacer radialement la tache lumineuse sur le disque. Lorsque l'on utilise un support d'informations du type représenté à la figure 3, si l'on calcule le signal d'erreur e pour les marques 23', on obtient e = V_{A'} - (V_{S'}- V_{A'}) = 2 V_{A'} - V_{S'} puisque V_{S'} est une constante. De la même façon, lorsque l'on arrive au niveau des marques décalées 33', e = V_{S'} - 2 V_{B'}. En fait, V_{S'} = V_{A'} + V_{B'} dépend des propriétés locales du disque et peut varier. Toutefois, l'expérience montre que ce signal varie lentement et que même si il est nécessaire de connaître le signal V_{S'} celui-ci doit être déterminé à une fréquence plus basse que le signal V_{A'} ou que le signal V_{B'}, ce qui permet de ne conserver qu'une seule marque décalée par zones de prégravure 5.

On décrira maintenant avec référence à la figure 6 un dispositif permettant de calculer le signal d'erreur. Comme représenté sur la figure 6, ce dispositif est constitué par des échantillonneurs-bloqueurs symbolisés par les capacités 91, 92, 93 et par des interrupteurs I₁, I₂, I₃, I₄ commandant leurs entrées. Les signaux issus des échantillonneurs-bloqueurs sont utilisés pour alimenter un soustracteur 94 possèdant deux entrées à haute impédance. Les interrupteurs I₁ et I₃ sont commandés par un signal d tandis que les interrupteurs I₂ et I₄ sont commandés par un signal g. Le signal d est actif et ferme les interrupteurs I₁ et I₃ pendant un temps limité inférieur à la durée de passage de la marque décalée 23' quand on est sur le même rayon du disque que cette marque 23' et il est inactif le reste du temps. Le signal g est actif et ferme les interrupteurs I₂ et I₄ pendant un temps limité inférieur à la durée de passage de la marque décalée 33' quand on est sur le même rayon du disque que cette marque 33'. Comme représenté sur la figure 6, la voie supérieure 100 du dispositif est alimentée par le signal V_{A'} issu du photodétecteur, tandis que la voie inférieure 101 est alimentée par le signal V_{B'} issu aussi du photodétecteur. D'autre part, les capacités 91 et 92 sont égales à c et beaucoup plus petites que la capacité 93 égale elle-même à C. Un rapport de 10 entre ces capacités est une valeur raisonnable. En régime établi, la sortie du dispositif de la figure 6 fournit tour à tour les valeurs V_{A'} - 1/2 V_{S'}, 1/2 V_{S'}- V_{B'}, V_{A'} - V_{S'}, et ainsi de suite, soit 1/2 e. En effet, V_{S'} représente la moyenne de V_{S'} pondérée sur tous les échantillons mesurés suivant une suite géométrique décroissante. A savoir V_{S'} = V_{A'n} + αV_{B'n} + α²V_{A'n - 1} + α³ V_{B'n - 1} + ...

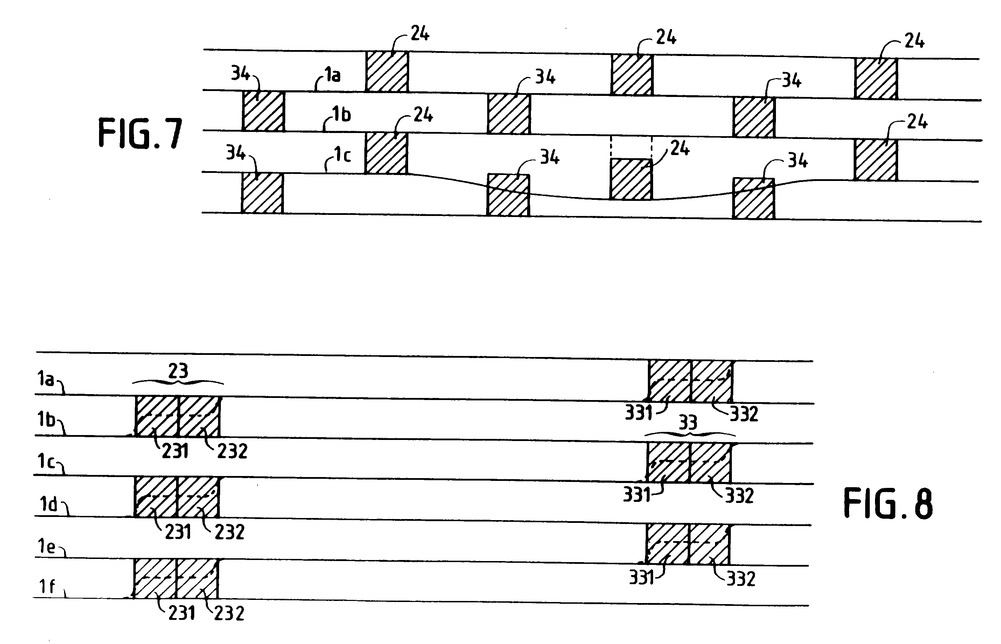

On décrira maintenant, avec référence aux figures 7 et 8, différents procédés de réalisation des marques décalées conforme à la présente invention.

Dans le cas de la figure 7, les marques décalées 24 ou 34 situées entre les pistes 1a et 1b ou 1b et 1c sont gravées en une seule fois par déflexion du faisceau de gravure lors de son passage sur une des pistes. Ainsi, les marques 34 situées entre les pistes 1a et 1b sont gravées par déflexion du faisceau de gravure lors de son passage sur la piste 1b tandis que les marques 24 situées entre les pistes 1b et 1c sont gravées en une seule fois par déflexion du faisceau de gravure lors de son passage sur la piste 1c. Les marques 24 sont donc attachées à la piste 1c et les marques 34 à la piste 1b. Ces deux marques sont utilisées pour asservir la tache lumineuse sur la piste 1b. Ce mode de réalisation des marques décalées peut présenter des inconvénients, notamment lorsqu'une piste a subi localement, lors de son enregistrement et pendant une durée assez courte, une déflexion due à des phénomènes parasites comme cela a été représenté sur la figure 7 pour la piste 1c. Dans ce cas, la déviation de la piste 1c qui a été volontairement exagérée afin de la rendre visible, introduit une erreur dans l'entraxe des pistes 1b et 1c et par suite la marque 24 associée à la piste 1c est déplacée par rapport à la piste 1b. Quand cette marque 24 est associée à la marque 34, elle crée un signal d'erreur de piste erronée.

Pour remédier à cet inconvénient, on peut graver les marques décalées comme symbolisées sur la figure 8. Dans ce cas, les marques décalées 23 et 33 sont réalisées chacune en deux parties référencées 231 et 232 ou 331 et 332. Dans ce cas, les marques décalées sont gravées en utilisant deux passages successifs du faisceau de gravure. Ainsi, lorsque le faisceau de gravure suit l'axe la la marque 231 peut être gravée en défléchissant le faisceau de gravure à droite puis la marque 331 sera gravée en défléchissant le faisceau de gravure à gauche. Ensuite, lorsque le faisceau de lecture sera asservi à la piste 1b, on gravera la partie 232 en défléchissant le faisceau de lecture à gauche et la partie 332 de la marque 33 prévue entre les pistes 1b et 1c en défléchissant le faisceau de lecture à droite et ainsi de suite pour l'ensemble des marques. Sur la figure on a aussi représenté en tireté des lignes-courbes pour relier les axes des pistes aux axes des demi-marques qui sont générées lors du passage du faisceau de gravure sur ces mêmes pistes. Dans ce cas, lors de l'utilisation des marques décalées pour effectuer l'asservissement, on génère un signal d'erreur V_{A'} en faisant la somme des deux signaux V_{A'1} et V_{A'2} provenant de l'échantillonnage respectivement de la demi-marque 231 et de la demi-marque 232. De même, on génère le signal V_{B'} en faisant la somme des deux signaux V_{B'1} et V_{B'2} provenant de l'échantillonnage respectivement de la demi-marque 331 et de la demi-marque 332. On peut ainsi à chaque instant moyenner l'effet de variation de l'entraxe de piste. Cela peut présenter des avantages dans la mesure où la gravure de deux demi-marques à la suite l'une de l'autre peut produire un résultat plus satisfaisant lors de la gravure du disque -père que la superposition sur toute leur longueur de deux marques.

## Revendications

1. Procédé de réalisation de marques déportées par rapport à l'axe moyen des pistes sur un support d'informations lisibles optiquement, le support étant muni de zones de prégravure (5) comportant lesdites marques et alternant avec des zones (4) destinées à l'enregistrement desdites informations, lesdites marques étant centrées à mi-distance entre deux pistes adjacentes et présentant des déports égaux et de signes contraires par rapport aux axes moyens des pistes d'une zone de prégravure à la suivante, caractérisé en ce que, lors de la réalisation d'un support-père, on grave les marques déportées d'un premier côté par déflexion du faisceau de gravure lors du passage sur une première piste et les marques déportées de l'autre côté par déflexion du faisceau de gravure lors du passage sur une seconde piste adjacente à la première piste puis l'on répète l'opération ci-dessus jusqu'à la fin de la gravure du support-père.

2. Procédé de réalisation de marques déportées par rapport à l'axe moyen des pistes sur un support d'informations lisibles optiquement, le support étant muni de zones de prégravure (5) comportant lesdites marques et alternant avec des zones (4) destinées à l'enregistrement desdites informations, lesdites marques étant centrées à mi-distance entre deux pistes adjacentes et présentant des déports égaux et de signes contraires par rapport aux axes moyens des pistes d'une zone de prégravure à la suivante, caractérisé en ce que, lors de la réalisation d'un support-père, on grave les marques déportées par déflexion du faisceau de gravure alternativement d'un côté et de l'autre de l'axe moyen des pistes, une première partie (231, 331) de la marque étant gravée lors du passage du faisceau sur une première piste et une seconde partie (232, 332) de la marque axialement complémentaire étant gravée lors du passage du faisceau sur une seconde piste adjacente à la première piste.

3. Procédé de réalisation selon la revendication 1 ou 2, caractérisé en ce que dans le sens perpendiculaire à l'axe des pistes chacune desdites marques déportées présente une largeur sensiblement égale à la distance la séparant d'une marque déportée adjacente selon ledit sens dans la même zone de prégravure.

4. Procédé de réalisation selon l'une des revendications 1 à 3, caractérisé en ce que lesdites marques déportées sont constituées par des éléments circulaires ou oblongs dans le sens de l'axe des pistes.

5. Procédé d'élaboration d'un signal d'erreur de suivi radial d'une piste par une tache lumineuse (T) d'exploration des pistes d'un support d'informations lisibles optiquement, le support étant muni de zones de prégravure (5) alternant avec des zones (4) destinées à l'enregistrement desdites informations, les zones de prégravure comportant des marques (23', 33') centrées à mi-distance entre deux pistes adjacentes et présentant une largeur optique, telle que fournie par une optique réelle de fonction de tranfert limitée, dans le sens perpendiculaire à l'axe des pistes, sensiblement égale à la largeur optique de la zone située entre deux marques successives selon ledit sens, d'une zone de prégravure à la suivante, les marques (23', 33') présentant des déports égaux et de signes contraires par rapport aux axes moyens des pistes, caractérisé en ce que l'on réalise au moins une fois la somme des signaux détectés par des moyens de détection optique lors du passage de la tache lumineuse sur deux marques déportées respectivement d'un côté et de l'autre et l'on mémorise cette somme, puis l'on élabore le signal d'erreur de suivi radial de piste en faisant une comparaison entre ladite somme et un signal détecté lors du passage de la tache lumineuse sur au moins une marque décalée.

6. Procédé d'élaboration d'un signal d'erreur de suivi radial d'une piste selon la revendication 5 caractérisé en ce que ladite comparaison se fait en utilisant un résultat de la différence entre ladite somme et ledit signal détecté.

7. Procédé d'élaboration d'un signal d'erreur de suivi radial d'une piste selon la revendication 6 caractérisé en ce que lors du passage de la tache lumineuse sur une première puis sur une seconde marque décalée, la première et la seconde marque décalée ayant des déports de signes contraires, les différences s'obtiennent respectivement en soustrayant ladite somme au signal détecté pour la première marque décalée et le signal détecté pour la seconde marque décalée à la dite somme.

8. Procédé selon l'une quelconque des revendications 5 à 7, caractérisé en ce que la somme est constituée par la moyenne des sommes réalisées sur l'ensemble des marques mesurées.

9. Procédé selon la revendication 8, caractérisé en ce que la moyenne des sommes est pondérée suivant une suite géométrique décroissante.

10. Dispositif de lecture d'un support d'informations pour la mise en oeuvre du procédé selon l'une quelconque des revendications 5 à 9, le dispositif comportant des moyens de détection optique pour détecter le rayonnement émergeant de la partie de la surface du support ayant interagi avec la tache lumineuse (T) et donner un signal électrique de sortie représentatif, des moyens d'asservissement assurant le suivi radial de piste et des moyens de mesure générant un signal d'asservissement appliqué aux moyens d'asservissement, caractérisé en ce que les moyens de mesure comportent un premier moyen (I₁, 91) effectuant pendant le passage de la tache lumineuse sur une marque déportée d'un premier côté, une mesure du signal électrique produit par les moyens de détection et mémorisant cette mesure pendant l'intervalle de temps entre deux mesures, un deuxième moyen (I₄, 92) effectuant pendant le passage de la tache lumineuse sur une marque déportée de l'autre côté, une mesure du signal électrique produit par les moyens de détection et mémorisant cette mesure pendant l'intervalle entre deux mesures, un troisième moyen (I₂, 93, I₃) réalisant la somme pondérée des signaux issus des premier et second moyens et la mémorisant pendant l'intervalle entre deux mesures et un amplificateur différentiel (94) connecté aux moyens ci-dessus de manière à soustraire alternativement soit le signal issu du premier ou du deuxième moyen au signal issu du troisième moyen soit le signal issu du troisième moyen au signal issu du deuxième ou du premier moyen, ledit amplificateur différentiel délivrant un signal fonction du signal d asservissement.

11. Dispositif selon la revendication 10, caractérisé en ce que les premier, deuxième et troisième moyens sont constitués par des circuits échantillonneur-bloqueur (91, 92, 93, I₁, I₂, I₃, I₄) destinés à mesurer l'amplitude du signal électrique généré par les moyens de détection optique à un instant déterminé pendant le passage d'une marque décalée et à mémoriser cette mesure pendant l'intervalle de temps s'écoulant entre deux mesures, lesdits circuits étant commandés par une impulsion délivrée par un moyen d'échantillonnage et correspondant à l'instant déterminé.

## Patentansprüche

1. Verfahren zur Herstellung von in bezug auf die Mittelachse der Spuren verschobenen Markierungen auf einem Träger optisch lesbarer Informationen, wobei der Träger mit Vorgravurzonen (5) versehen ist, die die Markierungen aufweisen und mit Zonen (4) abwechseln, die für die Aufzeichnung der Informationen bestimmt sind, wobei die Markierungen mittig zwischen zwei benachbarten Spuren zentriert sind und von einer Vorgravurzone zur folgenden gleiche Versetzungen mit entgegengesetzten Vorzeichen in bezug auf die Spurmittelachsen einer Vorgravurzone aufweisen, dadurch gekennzeichnet, daß während der Herstellung einer Mutterplatte die verschobenen Markierungen einer ersten Seite durch Ablenkung des Gravurstrahls während des Durchlaufs auf einer ersten Spur und die verschobenen Markierungen der anderen Seite durch Ablenkung des Gravurstrahls während des Durchlaufs auf einer zur ersten Spur benachbarten zweiten Spur eingraviert werden und dieser obige Vorgang dann bis zum Ende der Gravur der Mutterplatte wiederholt wird.

2. Verfahren zur Herstellung von in bezug auf die Mittelachse der Spuren verschobenen Markierungen auf einem Träger optisch lesbarer Informationen, wobei der Träger mit Vorgravurzonen (5) versehen ist, die die Markierungen aufweisen und mit Zonen (4) abwechseln, die für die Aufzeichnung der Informationen bestimmt sind, wobei die Markierungen mittig zwischen zwei benachbarten Spuren zentriert sind und von einer Vorgravurzone zur folgenden gleiche Versetzungen mit entgegengesetzten Vorzeichen in bezug auf die Spurmittelachsen einer Vorgravurzone aufweisen, dadurch gekennzeichnet, daß während der Herstellung einer Mutterplatte die verschobenen Markierungen durch Ablenkung des Gravurstrahls abwechselnd nach der einen und der anderen Seite der Mittelachse der Spuren graviert werden, wobei ein erster Teil (231, 331) der Markierung, die gerade markiert wird, während des Durchlaufs des Strahls auf einer ersten Spur und ein axial komplementärer zweiter Teil (232, 332) der Markierung während des Durchlaufs des Strahls auf einer zu der ersten Spur benachbarten zweiten Spur graviert wird.

3. Herstellungsverfahren nach Anspruch 1 oder 2, dadurch gekennzeichnet, daß in Richtung senkrecht zur Spurenachse jede der verschobenen Markierungen eine Breite aufweist, die genau gleich dem Abstand ist, der sie in derselben Richtung von einer verschobenen benachbarten Markierung in derselben Vorgravurzone trennt.

4. Herstellungsverfahren nach einem der Ansprüche 1 bis 3, dadurch gekennzeichnet, daß die verschobenen Markierungen von kreisförmigen oder in Richtung der Spurenachse länglichen Elementen gebildet werden.

5. Verfahren zur Verarbeitung eines Fehlersignals der radialen Nachlaufregelung einer Spur für einen Leuchtfleck (T) zum Abtasten der Spuren eines Trägers optisch lesbarer Informationen, wobei der Träger mit Vorgravurzonen (5) versehen ist, die sich mit Zonen (4) abwechseln, die für das Aufzeichnen der Informationen bestimmt sind, wobei die Vorgravurzonen Markierungen (23', 33') aufweisen, die mittig zwischen zwei benachbarten Spuren zentriert sind und in Richtung senkrecht zur Spurachse eine optische Breite aufweisen, wie sie von einer realen Optik mit begrenzter Übertragungsfunktion gestellt wird, die genau gleich der optischen Breite der Zone ist, die zwischen zwei in dieser Richtung aufeinanderfolgenden Markierungen liegt, wobei die Markierungen von einer Zone zur folgenden gleiche Versetzungen mit entgegengesetztem Vorzeichen in bezug auf die Mittelachsen der Spuren aufweisen, dadurch gekennzeichnet, daß wenigstens einmal die Summe der Signale gebildet wird, die während des Durchlaufs des Leuchtflecks über zwei versetzte Markierungen der einen beziehungsweise der anderen Seite von den optischen Detektionsmitteln erfaßt werden, und daß diese Summe gespeichert wird, daß dann das Fehlersignal der radialen Spurnachlaufregelung ermittelt wird, indem die Summe mit einem während des Durchlaufs des Leuchtflecks über wenigstens eine versetzte Markierung erfaßten Signal verglichen wird.

6. Verfahren zur Verarbeitung eines Fehlersignals der radialen Nachlaufregelung einer Spur nach Anspruch 5, dadurch gekennzeichnet, daß der Vergleich dadurch erfolgt, daß ein Ergebnis der Differenzbildung zwischen der Summe und dem erfaßten Signal verwendet wird.

7. Verfahren der radialen Nachlaufregelung einer Spur nach Anspruch 6, dadurch gekennzeichnet, daß während des Durchlaufs des Leuchtflecks über eine erste und dann eine zweite versetzte Markierung, wobei die erste und die zweite versetzte Markierung Versetzungen entgegengesetzten Vorzeichens aufweisen, sich die Differenzen dadurch ergeben, daß die Summe von dem für die erste versetzte Markierung erfaßten Signal beziehungsweise das für die zweite versetzte Markierung erfaßte Signal von der Summe abgezogen wird.

8. Verfahren nach einem der Ansprüche 5 bis 7, dadurch gekennzeichnet, daß die Summe aus dem Mittel der über die Gesamtheit der gemessenen Markierungen gebildeten Summen besteht.

9. Verfahren nach Anspruch 8, dadurch gekennzeichnet, daß das Mittel der Summen gemäß einer abnehmenden geometrischen Folge gewichtet wird.

10. Vorrichtung zum Lesen eines Informationsträgers für die Durchführung des Verfahrens nach einem der Ansprüche 5 bis 9, wobei die Vorrichtung folgendes aufweist: optische Erfassungsmittel zum Erfassen der Strahlung, die von dem Teil der Oberfläche der Trägers ausgeht, der mit dem Leuchtfleck (T) in Wechselwirkung stand, und zum Abgeben eines entsprechenden elektrischen Ausgangssignals, Regelungsmittel, die für die radiale Spurnachlaufregelung sorgen, sowie Meßmittel, die ein an die Regelungsmittel angelegtes Regelsignal erzeugen, dadurch gekennzeichnet, daß die Meßmittel ein erstes Mittel (I1, 91) aufweisen, das während des Durchlaufs des Leuchtflecks über eine auf eine erste Seite verschobene Markierung eine Messung des von den Erfassungsmitteln erzeugten elektrischen Signals durchführt und diese Messung während des Zeitintervalls zwischen zwei Messungen speichert, ein zweites Meßmittel (I4, 92), das während des Durchlaufs des Leuchtflecks über eine auf die andere Seite verschobene Markierung eine Messung des von den Erfassungsmitteln erzeugten elektrischen Signals durchführt und diese Messung während des Intervalls zwischen zwei Messungen speichert, ein drittes Mittel (I2, 93, I3), das die gewichtete Summe der von dem ersten und dem zweiten Mittel stammenden Signale bildet und sie während des Intervalls zwischen zwei Messungen speichert, sowie einen Differenzverstärker (94), der mit den obigen Mitteln derart verbunden ist, daß er abwechselnd entweder das von dem ersten oder von dem zweiten Mittel stammende Signal von dem vom dritten Mittel stammenden Signal abzieht oder das von dem dritten Mittel stammende von dem vom ersten oder vom zweiten Mittel stammenden Signal abzieht, wobei der Differenzverstärker ein Funktionssignal des Regelsignals liefert.

11. Vorrichtung nach Anspruch 10, dadurch gekennzeichnet, daß die ersten, zweiten und dritten Mittel aus Abtast/Halteschaltungen (91, 92, 93, I1, I2, I3, I4) bestehen, die dazu bestimmt sind, die Amplitude des elektrischen Signals zu messen, das von den optischen Erfassungsmitteln zu einem bestimmten Zeitpunkt während des Durchlaufs einer versetzten Markierung erzeugt wird, und diese Messung während des Zeitintervalls, das zwischen zwei Messungen abläuft, speichert, wobei die Schaltungen von einem Impuls gesteuert werden, der von einem Abtastmittel abgegeben wird und dem bestimmten Zeitpunkt entspricht.

## Claims

1. Process for the production of marks offset with respect to the mean axis of the tracks on an optically readable information carrier, the carrier being furnished with pre-etching zones (5) containing the said marks and alternating with zones (4) intended for the recording of the said information, the said marks being centred mid-way between two adjacent tracks and exhibiting equal offsets of opposite signs with respect to the mean axes of the tracks from one pre-etching zone to the next, characterized in that, during the production of a father-carrier, the marks offset to a first side are etched by deflecting the etching beam during transit over a first track and the marks offset to the other side are etched by deflecting the etching beam during transit over a second track adjacent to the first track and then the above operation is repeated until the conclusion of the etching of the father-carrier.

2. Process for the production of marks offset with respect to the mean axis of the tracks on an optically readable information carrier, the carrier being furnished with pre-etching zones (5) containing the said marks and alternating with zones (4) intended for the recording of the said information, the said marks being centred mid-way between two adjacent tracks and exhibiting equal offsets of opposite signs with respect to the mean axes of the tracks from one pre-etching zone to the next, characterized in that, during the production of a father-carrier, the offset marks are etched by deflecting the etching beam alternately to one side and to the other of the mean axis of the tracks, a first part (231, 331) of the mark being etched during transit of the beam over a first track and a second part (232, 332) of the mark which is axially complementary being etched during the transit of the beam over a second track adjacent to the first track.

3. Production process according to Claim 1 or 2, characterized in that in the direction perpendicular to the axis of the tracks each of the said offset marks exhibits a width substantially equal to the distance separating it from an adjacent offset mark along the said direction within the same pre-etching zone.

4. Production process according to one of Claims 1 to 3, characterized in that the said offset marks consist of circular or oblong elements directed along the axis of the tracks.

5. Process for the formulation of an error signal relating to radial tracking by a light spot (T) exploring the tracks of an optically readable information carrier, the carrier being furnished with pre-etching zones (5) alternating with zones (4) intended for the recording of the said information, the pre-etching zones containing marks (23', 33') centred mid-way between two adjacent tracks and exhibiting an optical width, such as provided by a real optic with limited transfer function, in the direction perpendicular to the axis of the tracks, substantially equal to the optical width of the zone situated between two successive marks along the said direction, from one pre-etching zone to the next, the marks (23', 33') exhibiting equal offsets of opposite signs with respect to the mean axes of the tracks, characterized in that the sum is taken at least once of the signals detected by optical detection means during the transit of the light spot over two marks offset respectively to one side and to the other and this sum is stored, then the radial tracking error signal is formulated by making a comparison between the said sum and a signal detected during the transit of the light spot over at least one shifted mark.

6. Process for the formulation of a radial tracking error signal according to Claim 5, characterized in that the said comparison is made by using a result of the difference between the said sum and the said detected signal.

7. Process for the formulation of a radial tracking error signal according to Claim 6, characterized in that during the transit of the light spot over a first and then over a second shifted mark, the first and the second shifted mark having offsets of opposite signs, the differences are obtained respectively by subtracting the said sum from the signal detected for the first shifted mark and the signal detected for the second shifted mark from the said sum.

8. Process according to any one of Claims 5 to 7, characterized in that the sum consists of the mean of the sums taken over the set of measured marks.

9. Process according to Claim 8, characterized in that the mean of the sums is weighted according to a decreasing geometric series.

10. Device for reading an information carrier for the implementation of the process according to any one of Claims 5 to 9, the device including optical detection means for detecting the radiation emerging from that part of the surface of the carrier having interacted with the light spot (T) and for yielding a representative electrical output signal, lock-on means ensuring radial tracking and measurement means generating a lock-on signal applied to the lock-on means, characterized in that the measurement means include a first means (I₁, 91) performing during the transit of the light spot over a mark offset to a first side, a measurement of the electrical signal produced by the detection means and storing this measurement during the time interval between two measurements, a second means (I₄, 92) performing during the transit of the light spot over a mark offset to the other side, a measurement of the electrical signal produced by the detection means and storing this measurement during the interval between two measurements, a third means (I₂, 93, I₃) taking the weighted sum of the signals output by the first and second means and storing it during the interval between two measurements and a differential amplifier (94) connected to the above means in such a way as to subtract alternately either the signal output by the first or by the second means from the signal output by the third means or the signal output by the third means from the signal output by the second or by the first means, the said differential amplifier delivering a signal dependent on the locked-on signal.

11. Device according to Claim 10, characterized in that the first, second and third means consist of sample-and-hold circuits (91, 92, 93, I₁, I₂, I₃, I₄) intended for measuring the amplitude of the electrical signal generated by the optical detection means at a specified instant during the transit of a shifted mark and for storing this measurement during the time interval which elapses between two measurements, the said circuits being controlled by a pulse delivered by a sampling means and corresponding to the specified instant.
